# FASCICULE DE BREVET EUROPEEN

(11) **EP 1 226 725 B1**
(45) Date de publication et mention de la délivrance du brevet: **06.10.2004**
(21) Numéro de dépôt: 00969633.7
(22) Date de dépôt: 18.10.2000
(51) Int. Cl.: H04Q 7/22

(54) **SYSTEME ET PROCEDE DE TRANSMISSION DE MESSAGES, ET UTILISATION DU SYSTEME DE TRANSMISSION POUR L'INVESTIGATION DE SERVICES FOURNIS**
SYSTEM UND VERFAHREN ZUR ÜBERTRAGUNG DER NACHRICHTEN, UND SYSTEMVERWENDUNG FÜR UNTERSUCHUNG DER ZU VERFÜGUNG GESTELLTEN DIENSTLEISTUNGEN
SYSTEM AND METHOD FOR TRANSMITTING MESSAGES AND USE OF SAID SYSTEM FOR TRANSMITTING MESSAGES FOR INVESTIGATING SERVICES THAT ARE PROVIDED

(30) Priorité: 18.10.1999 FR 9912970
(43) Date de publication de la demande: 31.07.2002
(73) Titulaire: CP8 Technologies, 78431 Louveciennes (FR)
(72) Inventeur: FOURNIER, Jean-Claude, F-35530 Noyal sur Vilaine (FR); ROSE, Stéphane, F-75003 Paris (FR)
(74) Mandataire: Renault, Patricia Marie Jacqueline
(86) Numéro de dépôt international: PCT/FR2000/002895
(87) Numéro de publication internationale: WO 2001/030093

(56) Documents cités:
- GB-A- 2 327 567
- US-A- 5 635 914
- US-A- 5 844 498

## Description

La présente invention concerne un système et un procédé de transmission de messages et l'utilisation du système de transmission pour l'investigation de services fournis, par exemple dans un réseau de radiotéléphonie, par exemple de type GSM.

Le système GSM est aujourd'hui parfaitement connu, répandu et accessible à un grand nombre de personnes. Il comprend un réseau constitué de serveurs connectés à des balises de radiocommunication, et d'un ensemble de radiotéléphones dotés d'une carte SIM. La carte SIM est un circuit électronique relié à un terminal, tel qu'un radiotéléphone, soit par des plages de contact, soit par une connexion sans contact, par exemple par radiofréquences. Le circuit électronique de la carte SIM comprend un circuit intégré incorporant un microprocesseur et une mémoire programmable non volatile comprenant toutes les informations utiles à l'usager et à l'opérateur. Le radiotéléphone comprend des moyens de communication avec la carte SIM, la communication s'effectue selon la norme ISO 7816-3 qui est un standard général, et selon les normes ETSI spécifiques au radiotéléphone.

Selon les normes ETSI, la carte SIM peut émettre et recevoir des « messages courts » appelés « SMS ». Ces messages sont normalisés dans les normes 03-40 GSM pour le transport des messages, 03-48 pour la sécurité du transport, 11.11 et 11.14 pour les traitements effectués par la carte. Les messages courts sont codifiés à l'aide de caractères de contrôle (identifiant, adresse de l'émetteur, nombre d'octets,...) et de données affichées sur un radiotéléphone. On peut distinguer deux types de messages courts selon le destinataire : les messages « SMS-PP » de type point à point ou « Point to Point » selon une terminologie anglo-saxonne et, les messages « SMS-CB » de diffusion générale ou « Cell Broadcast » selon une terminologie anglo-saxonne. Les messages SMS-PP possèdent un en-tête définissant précisément l'abonné auquel est destiné le message. Les messages "SMS-CB" sont par contre envoyés « à la volée » : l'émetteur ne sait pas qui va les recevoir. Dans ce cas, tous les radiotéléphones branchés se trouvant dans la zone de réception, reçoivent le message. Le message court est transmis à la carte qui le décode. Dans le même temps, un message d'acquittement de réception peut être émis vers l'émetteur. Ce type de message est utilisé, par exemple, lors de l'arrivée de voyageurs dans les aéroports, la balise de radiocommunication envoie en permanence des données relatives à l'occupation des hôtels, des agences de locations de voiture, le taux de la monnaie locale, etc....

Le document GB 2 327 567 montre un système où les messages ont un champ avec des informations relatives à la langue du message.

Le contenu des messages courts peut être enregistré dans un fichier de message « EF-SMS » de la mémoire programmable de la carte SIM. On peut également mémoriser les messages courts dans différents fichiers, soit en fonction du type de l'application, par exemple, les hôtels, les loueurs de voitures, etc., soit en fonction de l'émetteur du message, par exemple, un annonceur publicitaire pour des voyages. L'abonné consulte sa carte SIM afin de connaître les données qu'elle a enregistrées. Les données du message court peuvent contenir un numéro de téléphone que l'usager appelle pour utiliser le service proposé.

Le système GSM permet de transmettre des données d'un ou plusieurs fournisseurs de services à un abonné ou à une population d'abonnés. Lors d'une communication téléphonique, les interlocuteurs sont identifiés : ainsi, un fournisseur de services peut savoir quel abonné l'appelle. De même, lors de la lecture d'un message court et à condition que le radiotéléphone puisse communiquer avec le réseau GSM, une notification applicative peut être envoyée au serveur spécifié dans l'en-tête du message court. Toutefois, le serveur ne peut déterminer le nombre d'abonnés qui ont reçu le message et qui n'ont pas appelé. Le serveur ne peut donc pas dresser des données statistiques sur l'impact de ses messages. Enfin, le serveur ne peut connaître les caractéristiques des abonnés qui ont appelé, ceci afin de déterminer le type de population intéressée par ses messages.

Un autre inconvénient de l'état de la technique est le fait que tous les messages courts sont systématiquement enregistrés dans la mémoire de la carte SIM, même ceux qui n'offrent aucun intérêt pour l'abonné. Ainsi, la mémoire de la carte SIM peut être rapidement remplie de données inutiles pour l'abonné.

La présente invention vise à bâtir un système de transmission permettant de sélectionner les cibles de réception.

Ce but est atteint par le fait que le système de transmission de messages comporte un réseau de télécommunication comprenant un serveur de communication et au moins un radiotéléphone, le serveur comprenant des moyens d'émission de messages communique avec un ou plusieurs radiotéléphones, le ou les radiotéléphones étant dotés de moyens d'affichage et de moyens de mémorisation et de traitement des messages est caractérisé en ce que le message comprend un premier champ contenant des informations relatives au profil type du destinataire du message et en ce que les moyens de traitement comparent le profil mémorisé dans chaque radiotéléphone relatif à l'abonné utilisateur du radiotéléphone au profil contenu dans le message et autorisent la mémorisation des messages dans les moyens de mémorisation s'il y a compatibilité du profil de l'abonné utilisateur du radiotéléphone avec le profil type contenu dans le champ du message.

Selon une autre particularité, les messages comprennent un deuxième champ contenant une adresse de référence au serveur et les moyens de traitement mémorisent des informations d'utilisation des messages, lesdites informations étant envoyées audit serveur.

Selon une autre particularité, les moyens de traitement sont constitués par un module de service, qui s'autoconfigurent lors de son lancement en fonction de conditions de sélection contenues dans un troisième champ.

Selon une autre particularité, le module de service est réalisé en langage évolué interprété par la machine virtuelle d'une carte SIM.

Selon une autre particularité, le module de service comporte des moyens d'envoyer un accusé de réception du message mémorisé en fonction de données de sélection contenues dans un troisième champ.

Selon une autre particularité, le module de service comporte des moyens d'envoyer un accusé de réception accompagné du profil de l'utilisateur du radiotéléphone en fonction de données de sélection contenues dans le troisième champ du message.

Selon une autre particularité, le module de service comporte des moyens de déclencher l'affichage de chaque message en fonction des données de sélection contenues dans le troisième champ du message.

Selon une autre particularité, les données de sélection comportent un premier compteur du nombre d'affichages.

Selon une autre particularité, les données de sélection comportent un deuxième compteur d'initialisation de l'affichage.

Selon une autre particularité, les données de sélection comportent un indicateur de mode d'affichage choisit parmi plusieurs modes possibles.

Selon une autre particularité, les modes d'affichage sont paramétrables et multiples.

Ces modes correspondent au moins :
a) au mode d'affichage du message toutes les N mises en marche du radiotéléphone ;
b) au mode d'affichage du message tous les N appels lancés par l'abonné;
c) au mode d'affichage du message tous les N appels vers un numéro particulier;
d) au mode d'affichage du message tous les jours à partir d'une heure déterminée;
e) au mode d'affichage du message toutes les fins d'appel;
f) au mode d'affichage du message par le choix de l'abonné en passant par le menu.

Selon une autre particularité, le module de service comprend un algorithme de transformation du message par rapport à un profil d'utilisateur mémorisé dans la carte SIM.

Selon une autre particularité, le module de service comprend un algorithme de traitement et de remplacement des constantes par des noms et vice-versa.

Selon une autre particularité, le module de service comporte des moyens d'envoi de notifications, les notifications contenant le nombre d'affichages, le profil de chaque utilisateur des données d'identification du numéro de message et du client annonceur.

Un autre but de l'invention est de proposer un procédé de transmission de messages.

Ce but est atteint par le fait que le procédé de transmission de messages dans un réseau de télécommunication comprenant un serveur de communication et au moins un radiotéléphone, ledit serveur comprenant des moyens d'émission de messages vers un ou plusieurs radiotéléphones, le ou les radiotéléphones étant dotés de moyens d'affichage et de moyens de mémorisation et de traitement des messages est caractérisé en ce qu'il comprend :
- une étape d'émission d'un message comprenant un champ contenant des informations relatives au profil type du destinataire du message ;
- une étape de traitement du message reçu par le destinataire et de comparaison du profil contenu dans ce message avec le profil d'abonné utilisateur mémorisé dans la mémoire du radiotéléphone ; et
- une étape de mémorisation du message dans les moyens de mémorisation du radiotéléphone s'il y a compatibilité du profil de l'abonné utilisateur avec le profil type contenu dans le message.

Selon une autre particularité, le procédé comporte une étape d'affichage de messages à la survenance d'événements spécifiés dans un champ du message.

Selon une autre particularité, le procédé comporte une étape d'émission d'un accusé de réception du message.

Selon une autre particularité, le procédé comporte une étape d'émission d'un accusé de réception du message, l'accusé de réception étant accompagné du profil de l'utilisateur ayant reçu le message.

Selon une autre particularité, le procédé comporte une étape d'émission d'une notification du radiotéléphone vers le serveur contenant le nombre d'affichages effectués d'un message donné, le profil du radiotéléphone ayant effectué ces affichages et des données d'identification du numéro de message affiché et émis par un client annonceur ainsi qu'une donnée d'identification du client annonceur.

Un dernier but de l'invention est de proposer un système d'investigation de l'utilisation de services fournis par des radiotéléphones, ce système d'investigation permettant l'utilisation du message à des fins publicitaires ou promotionnelles.

Ce but est atteint par le fait que l'on utilise le système de transmission pour l'investigation de services fournis par le serveur comportant un algorithme d'historisation et d'extraction de statistiques à partir des notifications ou accusés de réception reçus en provenance du ou des radiotéléphones du système de transmission.

D'autres particularités et avantages de la présente invention apparaîtront plus clairement à la lecture de la description ci-après faite en référence aux dessins annexés dans lesquels :
- la figure 1 représente une vue schématique des composants du système de transmission de messages ;
- la figure 2a représente les composants logiciels implantés sur chaque station du client annonceur ;
- la figure 2b représente les composants logiciels implantés sur chaque serveur du réseau ;
- la figure 2c représente les composants logiciels ainsi que les informations mémorisées dans la carte SIM équipant chaque radiotéléphone ;
- la figure 3a représente le fichier de profil mémorisé dans la mémoire de la carte SIM équipant chaque radiotéléphone ;
- la figure 3b représente la structure du message de sélection émis par chaque station client à destination du serveur auquel ils sont reliés par un réseau filaire ;
- la figure 3c représente la structure de chaque message de transport émis par le serveur à la suite de la réception d'un message de sélection d'un client;
- la figure 4 représente la structure du fichier mémorisé dans la mémoire non volatile de la carte SIM équipant chaque radiotéléphone ;
- la figure 5 représente la structure des messages de notifications ou d'accusés de réception retournés par chaque radiotéléphone à destination du serveur ayant émis un message déterminé.

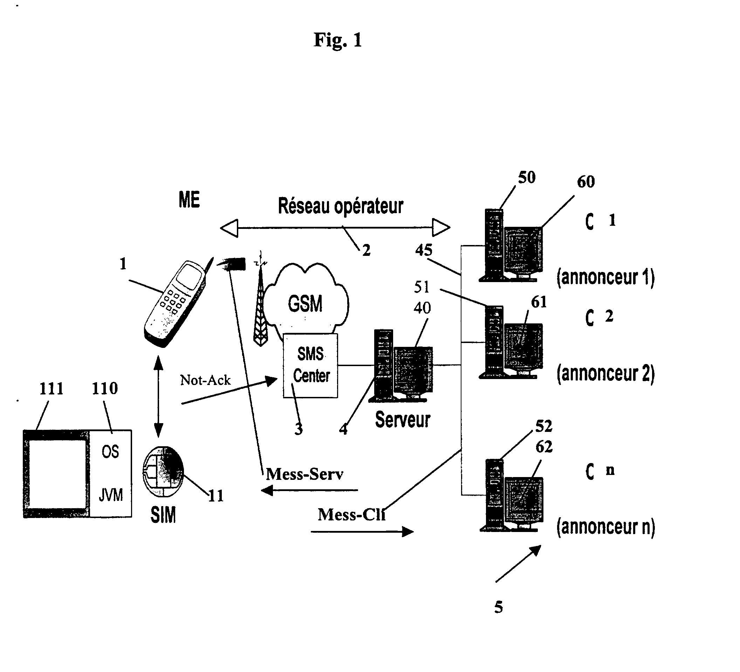

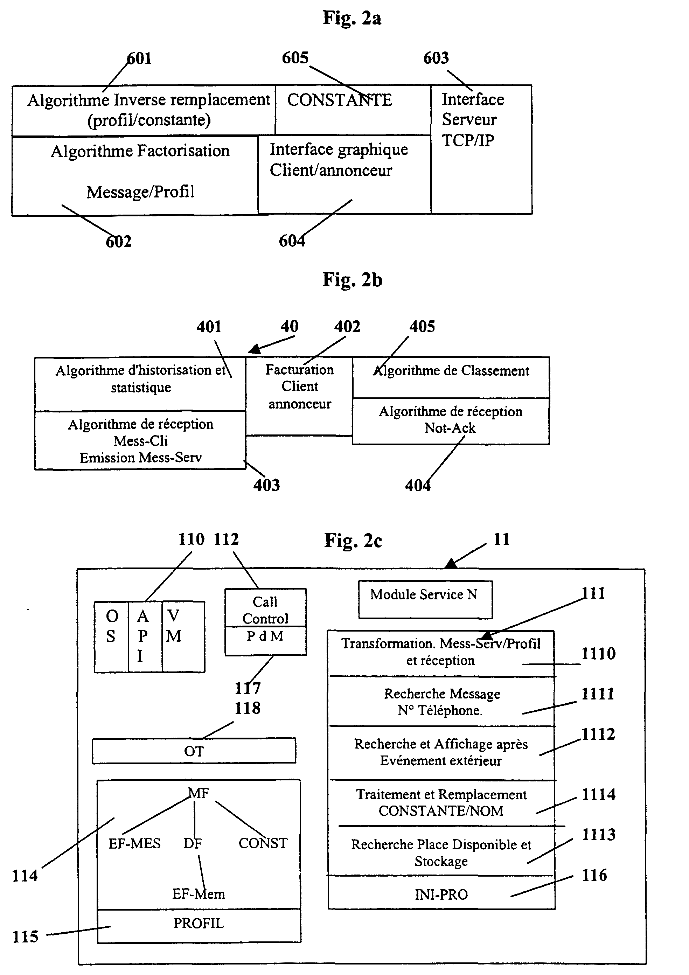

Le système de l'invention comprend comme représenté à la figure 1, un système au sol constitué d'un serveur (4) délivrant le service spécifique d'annonces publicitaires, ce serveur (4) étant relié par une liaison au centre SMS (3) de traitement de messages courts, lequel communique à travers le réseau GSM avec un ou plusieurs radiotéléphones (1). Chacun des radiotéléphones (1) est équipé d'une carte SIM (11). L'architecture générale du circuit intégré contenu dans la carte SIM est généralement constituée d'un microprocesseur connecté à un bus de liaison lequel est relié aux mémoires (110) de la carte. Les mémoires peuvent être de différents types, programmable ou non, volatile ou non et en général la carte SIM comporte une combinaison de ces différents types. Le système d'exploitation ainsi que la machine virtuelle dans un langage évolué de type "JAVA" sont inclus dans une mémoire non volatile, et des modules (111) de service spécifiques développés en langage évolué tel que "JAVA" peuvent être également mémorisés soit dans la mémoire non volatile programmable, soit dans la mémoire morte. Ces modules de service spécifiques sont des programmes qui, dans le cas de leur implantation dans une mémoire programmable non volatile, peuvent être téléchargés dans les cartes SIM (11) des radiotéléphones GSM (1). Le serveur (4) présent chez l'opérateur comporte un programme serveur (40, figure 2b) permettant de communiquer, d'une part à travers les liaisons avec le centre de messages courts SMS (3) et, d'autre part à travers le réseau (45) avec un ensemble (5) de stations clients (50-51-52). Chaque station client (50, 51, 52) comporte un programme client spécifique aux services (60-61-62) que les clients respectifs (C0-C1-C2), annonceurs et fournisseurs de services, souhaitent diffuser sur le réseau radiotéléphonique.

Comme l'exécution d'un programme sur une station se manifeste en général par un affichage créant des incitations pour l'utilisateur à effectuer certaines actions, les programmes spécifiques clients sont représentés par la partie visible (60, 61, 62) sur l'écran, mais il faut bien entendre que ces programmes sont stockés dans la mémoire de chaque station client et exécutés par le processeur respectif et que chaque station client comporte les mêmes modules de logiciel dit module client et représenté pour le client C0 à la figure 2a.

Le logiciel installé sur chaque station client est représenté à la figure 2a. Ce logiciel comporte un algorithme (601) inverse de remplacement des éléments du profil par des constantes, un deuxième algorithme (602) de factorisation des différents messages avec des profils différents pour générer des messages génériques et une interface (603) permettant la communication avec le serveur (4) selon un protocole tel que, par exemple, le protocole TCP/IP. Enfin, le programme de la station client comporte également une interface graphique (604) permettant soit l'affichage de messages ou d'icônes pour communiquer avec le client annonceur et permettre l'introduction des messages et des profils souhaités, soit l'affichage des histogrammes ou graphiques générés par les statistiques récoltées.

La figure 2b représente les différents modules constituant le programme (40) du serveur-réseau (4). Un premier module (401) est constitué de l'algorithme d'historisation et de statistiques. Un deuxième module (402) effectue la facturation du client annonceur. Un troisième module (403) traite la réception des messages du client annonceur et leur émission vers le centre SMS (3) du réseau GSM (2). Enfin, un quatrième module (404) effectue la réception des messages (Not-Ack) de notification ou d'accusé provenant du client utilisateur du radiotéléphone (1) ou d'un autre centre SMS du réseau GSM. La figure 2c représente la couche logicielle nécessaire au fonctionnement de la carte SIM (11) du client utilisateur. Cette couche logicielle est constituée d'un système d'exploitation OS, d'une interface de programmation applicative API, et d'une machine virtuelle VM. L'interface de programmation applicative API permet la communication entre le système d'exploitation et la machine virtuelle VM. La machine virtuelle VM est constituée d'un interpréteur de langage évolué permettant l'interprétation des instructions provenant soit du module de service spécifique à l'invention (111), soit d'autres modules tel que le module du service N (Module Service N). Ce module spécifique de service (111 ) comprend :
- un algorithme (1110) de réception et de transformation des messages par rapport au profil de la carte ;
- un algorithme (1111 ) de recherche de messages ayant le numéro de téléphone entré au clavier par l'utilisateur ;
- un troisième algorithme (1112) de recherche pour affichage suite à un événement extérieur ;
- un quatrième algorithme (1113) de recherche de place disponible ;
- et enfin un cinquième algorithme (1114) de traitement et de remplacement des constantes par des noms.

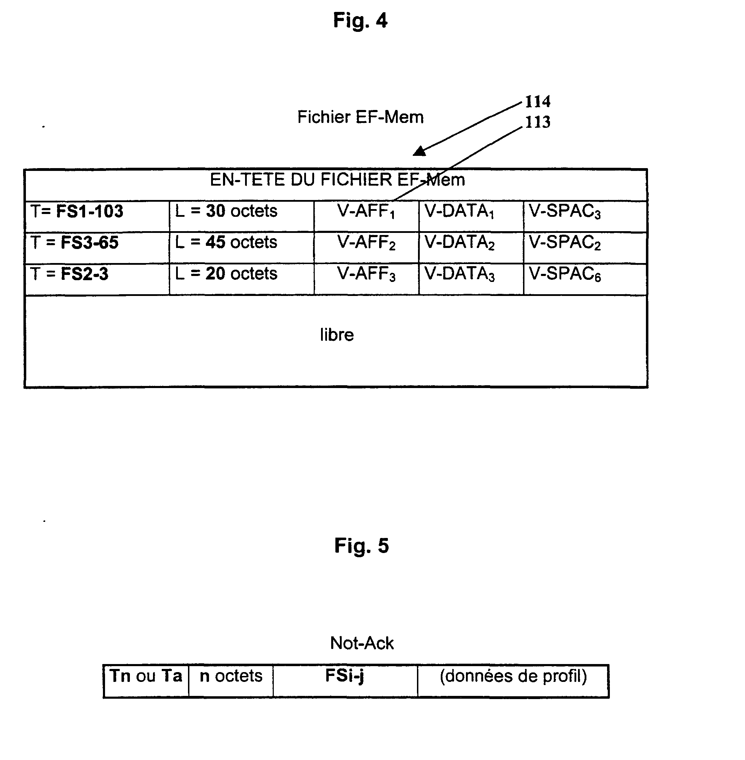

Le circuit intégré constituant la carte SIM (11) comporte également un algorithme dit de vérification d'appels (112) et les fichiers de données transmis par le réseau opérateur à la carte SIM du client utilisateur sont mémorisés dans un fichier (V-DATA) d'une mémoire (114) organisée en répertoire. Les profils (113, figure 4) comprennent les informations (V-AFF) de contrôle d'affichage permettant à un utilisateur abonné d'en prendre connaissance à certains moments. Ces profils (113) sont également mémorisés dans une partie non volatile d'une mémoire programmable de la carte SIM électronique. Le logiciel (40) du serveur-réseau (4) est chargé d'effectuer l'émission des messages aux abonnés, le suivi des retours de messages, le calcul statistique de l'utilisation des messages à afficher et le rapatriement de ces résultats vers les différents clients fournisseurs de services et annonceurs. Le logiciel (60, 61, 62) de la station client annonceur permet la conception des messages à afficher et des messages de sélection, selon l'invention, leur émission vers le serveur et délivre au client fournisseur de services les résultats statistiques reçus du serveur (4).

Dans un premier temps, l'interface graphique (604) permet au fournisseur de services de réaliser des messages courts qui par la suite vont être envoyés sur le réseau (2) et dont il désire connaître l'impact sur les abonnés. Ces messages de sélection (Mess-Cli) contiennent des données (V-AFF) de contrôle d'affichage. Une fois ces messages (Mess-Cli) élaborés, une station client (50 ou 51 ou 52) les transmet au serveur réseau (4) qui, grâce à son algorithme d'émission (403), envoie des messages de transport (Mess-Serv) à un certain nombre d'abonnés sélectionnés selon le mode point à point SMS-PP ou diffusé SMS-CB. Dans un troisième temps, le serveur (4) reçoit des données d'utilisation par les différents abonnés des messages envoyés sur le réseau. Le logiciel du serveur (4), par son algorithme (401) d'historisation, mémorise les données reçues, les incorpore dans des tables statistiques, et les envoie à la station du client respectif (C0, C1, C2). Enfin, le client annonceur ou le fournisseur de services consulte sur sa station client les statistiques afin de connaître l'impact de ces messages et le cas échéant modifier les messages et les renvoyer au serveur-réseau (4).

Les programmes (111) incorporés dans la carte SIM constituent des primitives et permettent la réception des messages parvenant au radiotéléphone (1) à travers le réseau de l'opérateur (2), leur traitement pour en extraire la partie concernant l'abonné, l'affichage et l'émission d'accusés de réception ou de notifications au serveur du réseau (4).

La carte SIM appartient à l'opérateur qui la transmet ensuite à un abonné. L'abonné est répertorié par un numéro unique contenu dans sa carte de telle sorte que l'abonné est parfaitement authentifié par elle. Le radiotéléphone ne devient un objet utilisable par un abonné qu'à condition de contenir une carte SIM. La carte SIM est largement spécifiée par la norme appelée ETSI - GSM 11.11. La carte SIM possède un système d'exploitation capable de traiter les informations reçues du radiotéléphone et contenues dans une mémoire non volatile programmable. Cette mémoire contient des fichiers de données configurés pour l'application GSM. Le système d'exploitation comprend une partie gravée dans la mémoire ROM et une autre écrite dans la mémoire programmable. Les primitives sont stockées de façon privilégiée dans la mémoire programmable, ce qui permet de rajouter des fonctions nouvelles ou de modifier les primitives existantes, mais on peut aussi les graver dans la ROM. Avantageusement, les primitives sont écrites en langage évolué, et interprétées lors de leur exécution par une machine virtuelle. Dans la suite du document, on considère que le système d'exploitation est le programme exécutable mémorisé dans la ROM et/ou téléchargé dans la mémoire programmable et que les primitives constituent le programme réalisant l'invention au niveau de la carte.

Comme cela a été vu précédemment, les messages sont stockés dans un fichier lors de la réception. Selon la présente invention, les messages reçus par la carte SIM, sont interprétés par les primitives de l'algorithme (1110) qui réalisent la fonction de filtre sur les données du message de transport (Mess-Serv). Seuls les messages de transport (Mess-Serv) satisfaisant à certains critères permettent la mémorisation du message à afficher : ces critères sont liés au profil (115) de l'abonné. Ce profil comprend le nom, la date de naissance (déterminant ainsi l'âge de l'abonné), le sexe, le type d'abonnement (ce qui peut fournir une indication sur les revenus et l'aire géographique des déplacements de l'abonné). Ces informations sont mémorisées dans un fichier de la carte SIM appelé « PROFIL ». L'écriture des données dans ce fichier est soumise à des conditions, par exemple, la bonne présentation du code porteur. La lecture peut être libre. Lorsque ces données sont absentes ou inexploitables, ou lorsque le fichier PROFIL n'existe pas, les primitives de la carte SIM n'exercent pas de filtrage.

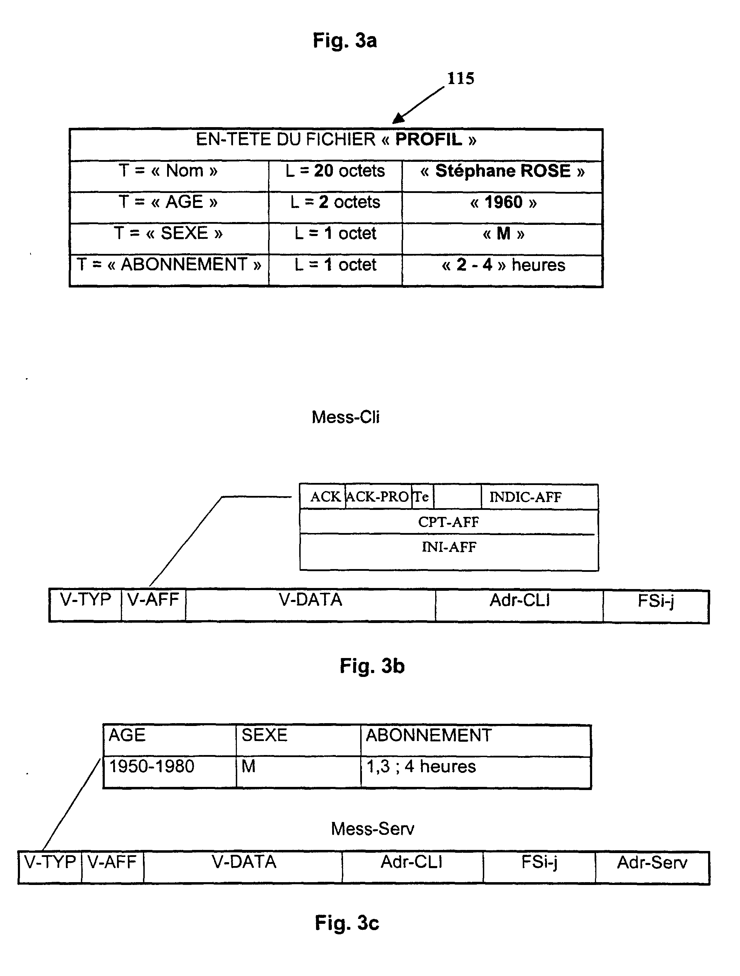

Les données dans le fichier PROFIL (115) sont écrites selon une structure classique dans les cartes à microprocesseur qui correspond à la structure T, L, V. La structure du fichier PROFIL est représentée à la figure 3a. T est l'identifiant de la donnée, L est la longueur en octets et V la donnée. Les données sont écrites sous la forme de codes BCD pour les valeurs numériques et ASCII pour les codes alphabétiques.

Dans l'exemple de la figure 3a, l'abonné dont le nom est « Stéphane ROSE » est né en 1960, il est de sexe masculin et détient un abonnement de type 2 dont le forfait comprend 4 heures de communication par mois. Le fichier PROFIL est créé en phase de personnalisation de la carte SIM. Lorsque l'abonné reçoit sa carte SIM en même temps que son abonnement, à l'aide d'une primitive (« INI-PRO ») (116, figure 2c) de mise à jour du fichier PROFIL, l'abonné ou un utilisateur habilité par l'abonné écrit les informations le concernant dans ce fichier. L'écriture de ces informations est conditionnée par la bonne présentation préalable du code porteur. D'autres primitives sont capables de traiter les informations contenues dans le fichier PROFIL (115).

Un client annonceur et fournisseur de services élabore un message à afficher (V-DATA) qui est lui-même incorporé dans un message de sélection (Mess-Cli) sur une station client. Il introduit, dans des champs spécifiques qui apparaissent sur un écran (60, 61, 62), les données qui seront affichées sur le radiotéléphone ainsi que le profil type de l'abonné susceptible d'être intéressé par le message à afficher. Le message est dit « multiprofil » car il peut convenir à des abonnés dont les données de profil sont différentes. L'âge est saisi sur la station client sous la forme d'un intervalle entre deux années de naissance, par exemple 1950 à 1980. Si plusieurs types d'abonnements sont possibles, les numéros correspondant à chacun des types sont énumérés en les séparant par des virgules. Si une durée d'abonnement est spécifiée, le nombre d'heures est indiqué, par exemple 4 heures.

Cette opération appelée le « typage » permet de créer dans la mémoire du serveur client (60, 61, 62) un tableau récapitulatif des informations introduites par le fournisseur de services. En reprenant les trois critères précédemment cités : âge, sexe et abonnement, le tableau dans la station client (50, 51, 52) est, par exemple, incorporé dans le champ V-TYP de la figure 3c.

Le fournisseur de services introduit aussi dans le message de sélection le mode d'affichage (V-AFF) du message à afficher. Le module client formate les données dans des champs spécifiques selon leur nature. Chaque élément du message court est codifié et se présente dans une structure de trois champs : T, L, V où le champ T contient l'identifiant de la donnée, L contient le nombre d'octets de la donnée et V la donnée. La structure type d'un message de sélection (Mess-Cli) émis par un client est représentée figure 3b.

Dans cette figure, le champ V-TYP contient les informations de multiprofil, le champ V-AFF contient l'information du mode d'affichage pour l'abonné, et le champ V-DATA contient les données à transmettre à l'abonné. Ce sont des codes ASCII contenant les messages. Le champ Adr-CLI est l'adresse du client. Le champ FSi-j est le numéro de message : il est fonction d'une référence de fournisseur de services que possède un client (FSi) et d'un numéro « j » de message attribué par ce module client.

Les informations liées au mode d'affichage sont regroupées dans le champ V-AFF qui est divisé en trois parties de chacune, par exemple, un octet. La première partie comprend trois indicateurs : un premier « ACK » (bit 7), un second « ACK-PRO » (bit 6) et un troisième « INDIC-AFF » (bit 2,1,0). Un cinquième bit Te demande la réception d'une notification d'effacement. Le quatrième bit est réservé. La seconde partie contient : une première valeur numérique constituant un compteur « CPT-AFF » et la troisième partie contient une deuxième valeur numérique constituant un deuxième compteur « INI-AFF ». Chacune des parties étant représentée par un octet, V-AFF est donc constituée de trois octets.

Si le bit du premier indicateur ACK (bit 7) est à « 1 », un accusé de réception est émis lorsque le message (Mess-Serv) est reçu dans la carte de l'abonné. L'accusé de réception est envoyé au serveur (4) via le radiotéléphone (1) et le réseau et à la structure représentée figure 5 que l'on décrira plus loin. Si le bit ACK est à « 0 », on considère alors que tous les messages émis sont effectivement reçus par leurs destinataires : c'est généralement le cas.

Si le bit du second indicateur ACK-PRO (bit 6) est à « 1 », le profil de l'abonné mémorisé dans le fichier PROFIL de la carte (11) est envoyé au serveur réseau (4) lors de l'accusé de réception et lors de chaque notification qui s'effectue, par exemple, lors de la lecture du message par l'abonné. Ainsi, le serveur (4) peut connaître le profil exact des abonnés intéressés, et même des abonnés non intéressés (il faut pour cela que le bit du premier indicateur ACK soit aussi positionné à « 1 »).

Le troisième indicateur INDIC-AFF contient les conditions de déclenchement de l'affichage sur le téléphone mobile, lesquelles sont lues par le module de service (111) lors de son lancement et utilisées pour auto-configurer le module de service. Ceci permet de rendre le module de service (111) totalement générique et, notamment l'algorithme (1112) de recherche et d'affichage.

Si la valeur de l'indicateur INDIC-AFF est égale à « 0010 », alors le message est affiché lors de chaque appel de l'abonné. La valeur du second compteur INI-AFF représente le nombre de fois que le message doit être affiché. Lors du stockage du message à afficher (V-DATA) dans le fichier de mémorisation EF-Mem de la mémoire (114), la primitive met à jour à « 00 » le contenu du premier compteur CPT-AFF. A chaque appel téléphonique, le message stocké dans V-DATA sort de la carte et est affiché sur l'afficheur du radiotéléphone. Ensuite, la valeur contenue dans le premier compteur CPT-AFF est incrémentée. Lorsque la valeur du premier compteur CPT-AFF devient égale à la valeur contenue dans le deuxième compteur INI-AFF, le message n'est plus émis par la carte. Le message ne s'affiche plus automatiquement, il sera effacé lorsqu'un message plus récent viendra prendre sa place par exécution de l'algorithme (1113) de recherche de place disponible.

Si la valeur de l'indicateur INDIC-AFF est égale à « 0011 », alors le message est affiché tous les N appels de l'abonné. La valeur du deuxième compteur INI-AFF, dans ce cas, représente le nombre d'appels s'intercalant entre deux affichages de messages sur le radiotéléphone. La valeur du premier compteur de CPT-AFF représente le nombre de fois que le message est affiché. Lors du stockage du message dans le fichier de mémorisation EF-Mem, la primitive (1113) met à jour à « 00 » le contenu d'un octet de travail OT dans la mémoire RAM (118) de la carte. Ensuite, la valeur contenue dans cet octet de travail OT est incrémentée lors de chaque appel. Lorsque sa valeur devient égale à la valeur contenue dans le deuxième compteur INI-AFF et tant que la valeur du premier compteur CPT-AFF n'est pas égale à « 00 », alors le message à afficher contenu dans V-DATA est émis par la carte et affiché sur le radiotéléphone (1). La valeur du compteur CPT-AFF est décrémentée, et la valeur de INI-AFF est écrite dans l'octet de travail. Lorsque la valeur du premier compteur CPT-AFF devient égale à « 00 », alors le message se s'affiche plus automatiquement : il sera effacé lorsqu'un message plus récent viendra prendre sa place.

Si la valeur de l'indicateur INDIC-AFF est égale à « 0100 », alors le message est affiché lors de chaque mise en marche du radiotéléphone (1), ce qui correspond à chaque connexion de l'abonné au réseau. La valeur du second compteur INI-AFF correspond dans ce cas au nombre de fois que le message est affiché. Lors du stockage du message dans le fichier de mémorisation EF-Mem, la primitive (1116) met à jour à « 00 » le contenu du premier compteur CPT-AFF. A chaque appel à afficher, les données du message contenu dans le champ V-DATA du fichier de mémorisation EF-Mem sortent de la carte et sont affichées par le radiotéléphone. Ensuite, la valeur contenue dans le premier compteur CPT-AFF est incrémentée. Lorsque la valeur du premier compteur CPT-AFF devient égale à la valeur contenue dans le deuxième compteur INI-AFF, le message à afficher (V-DATA) n'est plus émis par la carte. Le message ne s'affiche plus automatiquement : il sera effacé lorsque qu'un message plus récent viendra prendre sa place.

Si la valeur de l'indicateur INDIC-AFF est égale à « 0101 », alors le message est affiché toutes les N mises en marche du radiotéléphone. La valeur du second compteur INI-AFF représente le nombre de mises en marche s'intercalant entre deux affichages du message sur le radiotéléphone et la valeur du premier compteur de CPT-AFF représente le nombre de fois que le message est affiché. Lors du stockage du message dans le fichier de mémorisation EF-Mem, la primitive met à jour à « 00 » le contenu d'un octet de travail (OT) dans la mémoire RAM (118) de la carte. Ensuite, la valeur contenue dans cet octet de travail (OT) est incrémentée lors de chaque appel de l'usager. Lorsque sa valeur devient égale à la valeur contenue dans le second compteur INI-AFF et tant que la valeur du premier compteur CPT-AFF n'est pas égale à « 00 », alors le message est émis par la carte et affiché sur le radiotéléphone : la valeur du premier compteur CPT-AFF est décrémentée et la valeur du second compteur INI-AFF est écrite dans l'octet de travail. Lorsque la valeur du premier compteur CPT-AFF devient égale à « 00 », alors le message se s'affiche plus automatiquement : il sera effacé lorsque qu'un message plus récent reçu du serveur (4) viendra prendre sa place.

Le protocole qui, entre la carte et le radiotéléphone, permet l'affichage de messages, s'appelle « protocole SIM Toolkit ». Il est spécifié dans la norme ETSI - 11.14

Le serveur (4) reçoit le message de sélection (Mess-Cli) venant du client (C0,...,C2). Il rajoute au message de sélection un dernier champ contenant son adresse (Adr-Serv) afin que le radiotéléphone lui renvoie un accusé de réception du message de transport (Mess-Serv) et les données d'utilisation du message à afficher (V-DATA). Si le message de transport est de type SMS-PP transmis point à point, les adresses de l'émetteur (Adr-CLI) et du destinataire (une carte SIM) sont précisées dans la couche transport.

A travers le réseau GSM, le radiotéléphone reçoit le message (Mess-Serv) dont la structure représentée à la figure 3c correspond à celle du message de sélection (Mess-Cli) avec en plus un champ contenant l'adresse (Adr-Serv) du serveur (4).

Le radiotéléphone (1) reconnaît par la couche transport de son système d'exploitation qu'il s'agit d'un message SMS et le transmet à la carte SIM (11). Celle-ci décode les différents champs en fonction de leurs identifiants T et lance la primitive (1110) de réception d'un nouveau message. Si le bit ACK est à « 1 », un accusé de réception est émis vers le serveur (4) dont l'adresse est spécifiée dans le champ d'adresse serveur (Adr-Serv) ou dans la couche transport s'il s'agit d'un message court de type SMS-PP.

Après le décodage, le message à afficher (V-DATA) est normalement enregistré dans un fichier de mémorisation appelé « EF-Mem ». Tout d'abord, la primitive contrôle par l'algorithme (1113) que le message n'est pas déjà enregistré : ce contrôle s'effectue en comparant les numéros de message FSi-j et les valeurs de champ d'adresse serveur (Adr-Serv) des messages déjà stockés dans un fichier spécifique EF-MES avec celles du message reçu. Si le message est effectivement nouveau, alors la primitive teste si le profil de l'abonné contenu dans la mémoire (PROFIL) est compatible avec les données de typage (V-TYP) contenues dans le message (Mess-Serv).

Le premier champ des données de typage « AGE » est alors contrôlé. Dans l'exemple ci-dessus, l'abonné est né en 1960 et le message reçu est destiné aux abonnés nés entre 1950 et 1980, donc ce message peut lui être destiné. Ensuite, le système d'exploitation contrôle le second champ « SEXE », l'abonné est également du sexe masculin, donc ce message peut lui être destiné. Enfin, le champ « ABONNEMENT » est testé. L'abonné a, par exemple, un abonnement de type 2 alors que le message est destiné à ceux ayant un abonnement de type 1, 3 et 4. Donc ce message ne lui est pas destiné : il n'est pas enregistré dans la carte SIM et l'abonné n'en aura pas connaissance. Supposons maintenant que le profil de l'abonné mémorisé dans la mémoire PROFIL (115) soit compatible avec le typage V-TYP du message reçu, alors le message à afficher est enregistré dans le fichier de mémorisation EF-Mem et la carte SIM envoie une indication au radiotéléphone.

Un premier perfectionnement consiste à établir une grammaire d'interprétation des messages de transport (Mess-Serv) venant du serveur. Cette grammaire peut posséder la même syntaxe que le langage PASCAL, c'est-à-dire, en adoptant des instructions de type SI... ALORS ...... SINON ou SELON LE CAS (1) : .... (2) : ..... (3) ..... . Avec une telle grammaire, on peut associer des blocs de données différentes dans un même message, de telle sorte que selon les cas, on affiche un message plutôt qu'un autre. Par exemple, on peut spécifier que: SI l'abonné est né entre 1950 et 1959 ALORS on affiche un premier message, SINON un autre message. Un autre exemple consiste à conditionner le message en fonction du type d'abonnement : SI l'abonnement est « 1 » alors afficher « message 1 » ; SI l'abonnement est « 2 » alors afficher « message 2 » ; SI l'abonnement est « 3 » alors afficher « message 3 » ....

Un second perfectionnement consiste à utiliser dans la carte et dans la station client un fichier de constantes (CONSTANTE) permettant de diminuer la taille des messages. Le fichier de constantes (CONSTANTE) est un tableau d'autant de lignes qu'il y a de constantes. Les constantes sont référencées par un code associé à une chaîne de caractères ou à une adresse. On a dit précédemment que le champ (V-DATA) d'un message de transport (MES-SERV) contient des données à afficher sur le radiotéléphone (1), lesdites données sont codées en ASCII. Par exemple, l'année 1999 est codée sous la forme de quatre codes ASCII : 31H, 39h, 39h, 39h. Cette chaîne de caractères étant souvent utilisée, il est utile de la remplacer par un code, 89h par exemple. Dans le fichier de constantes (CONST), une ligne comprend les données suivantes : le code « 89 » , suivi d'un octet contenant la taille de la chaîne de caractère et enfin, la chaîne de caractère 31 H, 39h, 39h, 39h. La primitive (1112) d'affichage des données du message lit les données à afficher, tant que la valeur des octets correspond à un code ASCII affichable, (les codes affichables ont leurs valeurs comprises entre 20h et 7Fh), la primitive (1112 ) de la carte les renvoie tel quel au radiotéléphone (1). Si la valeur de l'octet lue ne correspond pas à un code ASCII affichable, alors la primitive (1114) va chercher dans le fichier de constantes (CONST) la chaîne de caractère qui correspond à cette valeur. Si la valeur dans le fichier de constantes (CONST) a une valeur correspondant à la taille de la chaîne de caractère égale à « 00 », alors les deux octets qui suivent correspondent à une adresse sur quatre octets. Dans ce cas, la primitive (1114) va prendre comme chaîne de caractère, ce qui est mémorisé à l'adresse spécifiée dans ces quatre octets. Les quatre octets représentent la référence du fichier où se trouve la chaîne (sur deux octets) et l'adresse dans ce fichier (sur deux octets).

Après un affichage du message, si l'abonné est intéressé, il appelle le fournisseur de services dont l'adresse ou le numéro de téléphone se trouve dans le champ de donnée (V-DATA) du message à afficher reçu. L'appel peut être simplifié par l'affichage de l'adresse ou du numéro sur le radiotéléphone et, par une touche particulière qui permet, lorsque l'abonné appuie dessus, de faire composer ladite adresse ou ledit numéro par le radiotéléphone.

Le fichier de mémorisation EF-Mem, représenté figure 4, est organisé sous la forme d'un tableau doté d'autant de lignes qu'il y a de messages courts à stocker. Lorsque l'usager désire consulter les messages enregistrés dans sa carte SIM, il interroge son radiotéléphone, ce dernier envoie des commandes de lecture à la carte SIM. Lors de chaque lecture par le radiotéléphone du message SMS référencé i, une notification d'appel est envoyée au serveur (4).

La taille du fichier de mémorisation EF-Mem est directement fonction de la quantité de messages qu'il peut contenir. Compte tenu d'une mémoire de 8 ou 16 Kilo-octets, classique pour une carte SIM, le fichier de mémorisation EF-Mem doit avoir une taille de l'ordre du Kilo-octets.

Dans l'exemple ci-dessus, le fichier de mémorisation EF-Mem contient trois messages. Le premier a été envoyé par le fournisseur de services identifié « FS1 » et le numéro de son message est « 103 », le contenu du message à afficher comprend 30 octets. La notification à envoyer lors d'une utilisation de ce message est émise vers le serveur numéro 3 dont l'adresse est égale à V-SPAC₃. Le second message a été envoyé par le fournisseur de services « FS3 » ; son numéro est « 65 » ; la notification à envoyer lors d'une utilisation de ce message est émise vers le serveur numéro 2 dont l'adresse est égale à V-SPAC₂. Un perfectionnement consiste à créer une cinquième colonne au corps du fichier de mémorisation EF-Mem, des informations relatives à la façon dont le message est utilisé y sont stockées.

Lorsque le fichier est plein, l'enregistrement d'un nouveau message s'effectue par la primitive (1113) en effaçant un ou plusieurs messages. De façon connue en soi, cette primitive efface d'abord les plus vieux messages afin de libérer une place suffisante au nouveau message. Cette gestion nécessite un pointeur (PdM) indiquant le dernier message rentré (le plus récent). Comme la lecture des lignes mémoires s'effectue de façon circulaire, le message situé immédiatement avant celui pointé est le plus ancien.

On a dit précédemment qu'une notification vers le serveur (4) spécifié dans le fichier de mémorisation EF-Mem est envoyée lors de chaque utilisation. Cette notification contient les mêmes informations que l'accusé de réception émis éventuellement, lors de l'écriture du message dans ce fichier. La structure d'une notification ou d'un accusé de réception se présente sous la forme représentée figure 5.

Une notification ou un accusé comprend les informations suivantes :
- un identifiant (Tn pour notification ou Ta pour accusé réception)
- une valeur de longueur d'octet du champ de données qui suivent
- un numéro de message FSi-j
- éventuellement les données de profil de l'abonné telles qu'elles sont lues dans le fichier PROFIL (si le bit ACK-PRO et le bit ACK mémorisés dans V-AFF sont à « 1 »)

Un perfectionnement de l'invention consiste à envoyer une notification vers le serveur (4) lors de l'effacement du message dans le fichier de mémorisation EF-Mem de la carte SIM déclenché par la primitive (1113). Cette émission peut être contrôlée par un bit de V-AFF, le cinquième bit, par exemple noté « Te ». L'identifiant Te d'une telle notification est spécifique. Le serveur (4) est averti que le message à afficher (V-DATA) n'est plus dans la carte SIM. Il peut alors le renvoyer s'il juge que ce message est important. Le fournisseur de services peut demander que ce message soit affiché régulièrement pendant une certaine durée, un mois par exemple ; si ce message est effacé et tant que la durée n'est pas écoulée, le serveur le renvoie. On peut aussi autoriser l'abonné à effacer le message dans le fichier de mémorisation EF-Mem, si cet effacement intervient après le premier affichage. On peut supposer que l'abonné n'est pas intéressé par celui-ci. Cette information est utile pour le traitement statistique effectué par le serveur (4).

Le serveur (4) reçoit les différentes notifications et/ou accusés de réception et calcule des données statistiques d'utilisation des messages. Pour cela, il possède une mémoire de taille importante, constituée d'un disque dur d'ordinateur, dans laquelle les messages venant des différents clients (C1,...,Cn) sont enregistrés ainsi que les notifications et accusés de réception venant des différents abonnés.

Chaque message venant d'un client (C1,...,Cn) est référencé par son numéro de message FSi-j. Ce numéro étant également présent dans les messages de notification et d'accusé de réception, le serveur peut donc parfaitement, grâce à la primitive (405) de classement des notifications des accusés, classer dans sa mémoire les notifications ou accusés en fonction des numéros de client annonceur. Il comptabilise, dans un champ spécifique associé au message, le nombre d'accusés de réception et le nombre de notifications. Le serveur (4) analyse également le profil envoyé dans la notification ou l'accusé et peut ainsi dresser les profils types des abonnés.

Soit le message dont le profil type déterminé par le client annonceur était le suivant :

| | | |
|---|---|---|
| 11950-1980 | M | 1,3 ; 4 heures |

Suite à sa diffusion par le réseau et à la réception de notification ou accusé de réception, le serveur peut dresser, par exemple, le bilan statistique ci-après.
1 - Abonnés ayant envoyé uniquement l'accusé de réception (pas d'affichage, le message n'a pas été enregistré) : nombre 1405

| | |
|---|---|
| Age | 17% ont de 10 à 19 ans, |
| | 33% ont de 20 à 29 ans, |
| | 28 % ont de 30 à 39 ans, ..... |
| Sexe | 39% sont de sexe masculin |
| | 61 % sont de sexe féminin |
| Abonnement | 14% ont un abonnement « 1 » |
| | 49% ont un abonnement « 2 », ... |

2 - Abonnés ayant envoyé au moins une notification d'affichage : 508

| Nombre d'affichages | 1 | 2 | 3 | 4 | 5 | 6 | 7 | 8 |
|---|---|---|---|---|---|---|---|---|
| nombre d'abonnés | 192 | 156 | 84 | 56 | 12 | 5 | 1 | 0 |

Bien que particulièrement adaptée à des applications publicitaires, la présente invention peut être utilisée dans d'autres domaines. Par exemple, elle peut être utilisée par un fournisseur de voyage. Les voyages sont définis par un point de départ, une destination, une date et un prix : la carte compare le profil de l'usager avec les éléments du voyage qui lui sont transmis et sélectionne les voyages en accordant un ordre de priorité. Le fournisseur de voyage peut ainsi adapter son offre en fonction des souhaits (et donc des profils) des abonnés. La présente invention a été décrite dans son utilisation avec un système de type GSM, mais elle peut être utilisée dans tout autre système de communication radiotéléphonique.

## Revendications

1. Système de transmission de messages comportant un réseau de télécommunication (2) comprenant un serveur (4) de communication et au moins un radiotéléphone (1), le serveur comprenant des moyens d'émission de messages vers un ou plusieurs radiotéléphones, le ou les radiotéléphones (1) étant dotés de moyens de mémorisation et de traitement des messages (Mess-Serv), **caractérisé en ce que** chaque message (Mess-Serv) comprend un premier champ (V-TYP) contenant des informations relatives au profil type du destinataire du message et **en ce que** les moyens de traitement comparent le profil mémorisé dans chaque radiotéléphone relatif à l'abonné utilisateur du radiotéléphone, au profil contenu dans le message et autorisent la mémorisation du message dans les moyens de mémorisation s'il y a compatibilité du profil de l'abonné utilisateur du radiotéléphone avec le profil type contenu dans le champ du message.

2. Système de transmission de messages selon la revendication 1, **caractérisé en ce que** le message comprend un champ contenant une adresse de référence au serveur et **en ce que** les moyens de traitement mémorisent des informations d'utilisation des messages, lesdites informations étant envoyées audit serveur.

3. Système selon la revendication 1, **caractérisé en ce que** les moyens de traitement comprennent un module de service (111) s'autoconfigurant lors de son lancement en fonction de conditions de sélection contenues dans un deuxième champ (V-AFF).

4. Système de transmission de messages selon la revendication 3, **caractérisé en ce que** le module de service comporte des moyens d'envoyer un accusé de réception du message mémorisé accompagné ou non du profil de l'utilisateur du radiotéléphone en fonction de données de sélection (ACK, ACK-PRO) contenues dans le deuxième champ (V-AFF) du message.

5. Système selon la revendication 3, **caractérisé en ce que** le module de service comporte des moyens de déclencher l'affichage de chaque message en fonction des données de sélection (INDIC-AFF, CPT-AFF, INI-AFF) contenues dans le deuxième champ (V-AFF) du message.

6. Système selon la revendication 5, **caractérisé en ce que** les données de sélection comportent un compteur d'un nombre d'affichages (CPT-AFF) et éventuellement un deuxième compteur d'un nombre d'initialisation d'affichage (INI-AFF).

7. Système selon la revendication 5, **caractérisé en ce qu'**un indicateur (INDIC-AFF) de mode d'affichage choisit parmi plusieurs modes possibles.

8. Système selon la revendication 7, **caractérisé en ce que** les modes d'affichage sont paramétrables et multiples et correspondent au moins :
a) au mode d'affichage du message toutes les N mises en marche du radiotéléphone ;
b) au mode d'affichage du message tous les N appels lancés par l'abonné;
c) au mode d'affichage du message tous les N appels vers un numéro particulier;
d) au mode d'affichage du message tous les jours à partir d'une heure déterminée;
e) au mode d'affichage du message toutes les fins d'appel;
f) au mode d'affichage du message par le choix de l'abonné en passant par le menu.

9. Système selon la revendication 1, **caractérisé en ce que** les moyens de traitement comprennent un module de service comprenant un algorithme (1110) de transformation du message par rapport à un profil d'utilisation mémorisé dans la carte SIM (11).

10. Système selon la revendication 1, **caractérisé en ce que** les moyens de traitement comprennent un module de service comprenant un algorithme (1114) de traitement et de remplacement des constantes par des noms et vice-versa.

11. Système selon la revendication 1, **caractérisé en ce que** les moyens de traitement comprennent un module de service comprenant un algorithme (1112) de recherche pour affichage suite à un événement extérieur.

12. Système selon la revendication 1, **caractérisé en ce que** les moyens de traitement comprennent un module de service comportant des moyens de recherche de place disponible pour enregistrer de nouveaux messages et effacer les messages affichés le nombre de fois prévu (1113).

13. Système selon la revendication 1, **caractérisé en ce que** les moyens de traitement comprennent un module de service comportant des moyens d'envoi de notifications, les notifications contenant le nombre d'affichages, le profil de chaque utilisateur, et des données d'identification du client annonceur.

14. Procédé de transmission de messages dans un réseau de télécommunication comprenant un serveur de communication et au moins un radiotéléphone, ledit serveur comprenant des moyens d'émission de messages vers un ou plusieurs radiotéléphones, le ou les radiotéléphones étant dotés de moyens de mémorisation et de traitement des messages **caractérisé en ce qu'**il comprend :
- une étape d'émission d'un message (Mess-Serv) comprenant un champ (V-TYP) contenant des informations relatives au profil type du destinataire du message et
- une étape de traitement du message reçu par le destinataire et de comparaison du profil contenu dans ce message (Mess-Serv) avec un profil d'abonné utilisateur mémorisé dans la mémoire du radiotéléphone;
- une étape de mémorisation du message dans les moyens de mémorisation du radiotéléphone s'il y a compatibilité du profil de l'abonné utilisateur avec le profil type contenu dans le message.

15. Procédé selon la revendication 14, **caractérisé en ce que** le ou les radiotéléphones comprennent des moyens d'affichage, le procédé comportant une étape d'affichage de messages à la survenance d'événements spécifiés dans un champ du message.

16. Procédé selon la revendication 14, **caractérisé en ce qu'**il comporte une étape d'émission d'un accusé de réception du message accompagné ou non du profil de l'utilisateur ayant reçu le message.

17. Procédé selon la revendication 14, **caractérisé en ce qu'**il comporte une étape d'émission d'une notification du radiotéléphone vers le serveur, contenant un nombre d'affichages effectués d'un message donné, le profil du radiotéléphone ayant effectué ces affichages et des données d'identification du numéro de message affiché et émis par un client annonceur ainsi qu'une donnée d'identification du client annonceur.

18. Utilisation du système de transmission selon une des revendications 1 à 13, pour l'investigation de services fournis, **caractérisé en ce que** le serveur comprend un algorithme d'historisation et d'extraction de statistiques à partir des notifications ou accusés de réception reçus en provenance du ou des radiotéléphones du système de transmission.

19. Carte destinée à équiper un radiotéléphone comportant des moyens de mémorisation et de traitement de messages reçus par le-dit radiotéléphone, **caractérisé en ce que** les moyens de traitement comparent le profil mémorisé dans les moyens de mémorisation relatif à l'abonné utilisateur du radiotéléphone au profil contenu dans le message et autorisent la mémorisation du message dans les moyens de mémorisation s'il y a compatibilité du profil de l'abonné utilisateur du radiotéléphone avec le profil type contenu dans le message.

20. Carte selon la revendication 19, **caractérisé en ce qu'**elle comprend des moyens permettant d'envoyer au serveur ayant émis le message une notification, et / ou un accusé de réception du message mémorisé accompagné ou non du profil de l'abonné utilisateur en fonction de données de sélection contenues dans un champ.

21. Station client ou serveur comprenant des moyens d'émission de messages destinés à un ou plusieurs radiotéléphones, le ou les radiotéléphones étant dotés de moyens de mémorisation et de traitement des messages, **caractérisé en ce qu'**il émet des messages contenant des informations relatives au profil type du destinataire du message de manière que les moyens de traitement comparent le profil mémorisé dans chaque radiotéléphone relatif à l'abonné utilisateur du radiotéléphone, au profil contenu dans le message et autorisent la mémorisation du message dans les moyens de mémorisation s'il y a compatibilité du profil de l'abonné utilisateur du radiotéléphone avec le profil type contenu dans le champ du message.

22. Serveur selon la revendication 21, **caractérisé en ce qu'**il reçoit des notifications et / ou des accusés de réception et calcule des données statistiques d'utilisation desdits messages.

## Patentansprüche

1. System zum Übertragen von Nachrichten mit einem Telekommunikationsnetz (2), das einen Kommunikationsserver (4) und mindestens ein Funktelefon (1) umfasst, wobei der Server Mittel zum Senden von Nachrichten an ein oder mehrere Funktelefone umfasst und das oder die Funktelefone (1) mit Mittel zum Speichern und Bearbeiten der Nachrichten (Mess-Serv) ausgestattet sind, **dadurch gekennzeichnet, dass** jede Nachricht (Mess-Serv) ein erstes Feld (V-TYP) mit Informationen über das Standardprofil des Empfängers der Nachricht enthält und dass die Mittel zum Bearbeiten das in jedem Funktelefon gespeicherte Profil des Anwenderteilnehmers des Funktelefons mit dem in der Nachricht enthaltenen Profil vergleichen und das Speichern der Nachricht in den Speichermitteln zulassen, wenn das Profil des Anwenderteilnehmers des Funktelefons mit dem im Feld der Nachricht enthaltenen Standardprofil kompatibel ist.

2. System zum Übertragen von Nachrichten nach Anspruch 1, **dadurch gekennzeichnet, dass** die Nachricht ein Feld mit einer sich auf den Server beziehenden Adresse enthält und dass die Mittel zum Bearbeiten die Anwendungsinformationen der Nachrichten speichern, wobei diese Informationen an diesen Server gesendet werden.

3. System nach Anspruch 1, **dadurch gekennzeichnet, dass** die Mittel zum Bearbeiten ein Dienstleistungsmodul (111) umfassen, das sich bei seinem Start in Abhängigkeit von in einem zweiten Feld (V-AFF) enthaltenen Auswahlbedingungen selbst konfiguriert.

4. System zum Übertragen von Nachrichten nach Anspruch 3, **dadurch gekennzeichnet, dass** das Dienstleistungsmodul Mittel zum Senden einer Empfangsbestätigung der gespeicherten Nachricht mit oder ohne das Profil des Anwenders des Funktelefons in Abhängigkeit von im zweiten Feld (V-AFF) der Nachricht enthaltenen Auswahldaten (ACK, ACK-PRO) umfasst.

5. System nach Anspruch 3, **dadurch gekennzeichnet, dass** das Dienstleistungsmodul Mittel zum Auslösen der Anzeige jeder Nachricht in Abhängigkeit der im zweiten Feld (V-AFF) der Nachricht enthaltenen Auswahldaten (INDIC-AFF, CPT-AFF, INI-AFF) enthält.

6. System nach Anspruch 5, **dadurch gekennzeichnet, dass** die Auswahldaten einen Zähler einer Anzeigenanzahl (CPT-AFF) und eventuell einen zweiten Zähler einer Anzeigeninitialisierungsanzahl (INI-AFF) umfassen.

7. System nach Anspruch 5, **dadurch gekennzeichnet, dass** ein Anzeigemodusindikator (INDIC-AFF) unter mehreren möglichen Modi auswählt.

8. System nach Anspruch 7, **dadurch gekennzeichnet, dass** die Anzeigemodi parametrierbar und vielfach sind und mindestens folgendem entsprechen:
a) Anzeigemodus der Nachricht alle N Inbetriebnahmen des Funktelefons;
b) Anzeigemodus der Nachricht alle N vom Teilnehmer durchgeführten Anrufe;
c) Anzeigemodus der Nachricht alle N Anrufe einer bestimmten Nummer;
d) Anzeigemodus der Nachricht täglich ab einer bestimmten Uhrzeit;
e) Anzeigemodus der Nachricht bei allen Gesprächsenden;
f) Anzeigemodus der Nachricht nach Wahl des Teilnehmers über das Menü.

9. System nach Anspruch 1, **dadurch gekennzeichnet, dass** die Mittel zum Bearbeiten ein Dienstleistungsmodul mit einem Umwandlungsalgorithmus (1110) der Nachricht in Bezug auf ein in der SIM-Karte (11) gespeichertes Anwendungsprofil umfassen.

10. System nach Anspruch 1, **dadurch gekennzeichnet, dass** die Mittel zum Bearbeiten ein Dienstleistungsmodul mit einem Algorithmus (1114) zum Bearbeiten und Ersetzen der Konstanten durch Namen und umgekehrt umfassen.

11. System nach Anspruch 1, **dadurch gekennzeichnet, dass** die Mittel zum Bearbeiten ein Dienstleistungsmodul mit einem Suchalgorithmus (1112) für eine Anzeige nach einem externen Ereignis umfassen.

12. System nach Anspruch 1, **dadurch gekennzeichnet, dass** die Mittel zum Bearbeiten ein Dienstleistungsmodul mit Mittel zum Suchen verfügbaren Platzes für das Speichern neuer Nachrichten und Löschen der wie vorgesehen oft angezeigten Nachrichten (1113) umfassen.

13. System nach Anspruch 1, **dadurch gekennzeichnet, dass** die Mittel zum Bearbeiten ein Dienstleistungsmodul mit Mittel zum Senden von Mitteilungen umfassen, die die Anzahl der Anzeigen, das Profil jedes Anwenders sowie die Identifikationsdaten des Anzeigenkunden enthalten.

14. Übertragungsverfahren von Nachrichten in einem Telekommunikationsnetz mit einem Kommunikationsserver und mindestens einem Funktelefon, wobei der Server Mittel zum Senden von Nachrichten an ein oder mehrere Funktelefone umfasst und das oder die Funktelefone mit Mittel zum Speichern und Bearbeiten der Nachrichten ausgestattet sind, **dadurch gekennzeichnet, dass** es folgendes umfasst:
- eine Sendephase einer Nachricht (Mess-Serv) mit einem Feld (V-TYP), das Informationen über das Standardprofil des Empfängers der Nachricht enthält und
- eine Bearbeitungsphase der vom Empfänger erhaltenen Nachricht sowie eine Vergleichsphase des in dieser Nachricht (Mess-Serv) enthaltenen Profils mit einem im Speicher des Funktelefons gespeicherten Anwenderteilnehmerprofil;
- eine Speicherphase der Nachricht in den Speichermitteln des Funktelefons, wenn das Profil des Anwenderteilnehmers mit dem in der Nachricht enthaltenen Standardprofil kompatibel ist.

15. Verfahren nach Anspruch 14, **dadurch gekennzeichnet, dass** das oder die Funktelefone Anzeigemittel umfassen, wobei das Verfahren eine Anzeigephase von Nachrichten bei Eintreten von in einem Feld der Nachricht spezifizierten Ereignissen umfasst.

16. Verfahren nach Anspruch 14, **dadurch gekennzeichnet, dass** es eine Sendephase einer Empfangsbestätigung der Nachricht mit oder ohne das Profil des Anwenders umfasst, der die Nachricht erhalten hat.

17. Verfahren nach Anspruch 14, **dadurch gekennzeichnet, dass** es eine Sendephase einer Mitteilung des Funktelefons an den Server umfasst, die eine Anzahl von erfolgten Anzeigen einer bestimmten Nachricht, das Profil des Funktelefons, das diese Anzeigen durchgeführt hat und Identifikationsdaten der von einem Anzeigenkunden angezeigten und gesendeten Nachrichtennummer sowie Identifikationsdaten des Anzeigenkunden enthält.

18. Anwendung des Übertragungssystems nach einem der Ansprüche 1 bis 13 zum Untersuchen von gestellten Dienstleistungen, **dadurch gekennzeichnet, dass** der Server einen Algorithmus zur Historisierung und zum Extrahieren von Statistiken aus Mitteilungen oder von dem bzw. den Funktelefonen des Übertragungssystems eingegangenen Empfangsbestätigungen umfasst.

19. Karte zur Ausstattung eines Funktelefons mit Mittel zum Speichern und Bearbeiten von diesem Funktelefon erhaltenen Nachrichten, **dadurch gekennzeichnet, dass** die Mittel zum Bearbeiten das in den Speichermitteln gespeicherte Profil des Anwenderteilnehmers des Funktelefons mit dem in der Nachricht enthaltenen Profil vergleichen und das Speichern der Nachricht in den Speichermitteln zulassen, wenn das Profil des Anwenderteilnehmers des Funktelefons mit dem in der Nachricht enthaltenen Standardprofil kompatibel ist.

20. Karte nach Anspruch 19, **dadurch gekennzeichnet, dass** sie Mittel umfasst, mit denen an den Server, der die Nachricht gesendet hat, eine Mitteilung gesendet werden kann und/oder eine Empfangsbestätigung der gespeicherten Nachricht mit oder ohne das Profil des Anwenderteilnehmers in Abhängigkeit von in einem Feld enthaltenen Auswahldaten.

21. Kundenstation oder Server mit Mittel zum Senden von Nachrichten an ein oder mehrere Funktelefone, wobei das oder die Funktelefone mit Mittel zum Speichern und Bearbeiten der Nachrichten ausgestattet sind, **dadurch gekennzeichnet, dass** sie Nachrichten aussendet, die Informationen über das Standardprofil des Empfängers der Nachricht enthalten, so dass die Mittel zum Bearbeiten das in jedem Funktelefon gespeicherte Profil des Anwenderteilnehmers des Funktelefons mit dem in der Nachricht enthaltenen Profil vergleichen und das Speichern der Nachricht in den Speichermitteln zulassen, wenn das Profil des Anwenderteilnehmers des Funktelefons mit dem in dem Feld der Nachricht enthaltenen Standardprofil kompatibel ist.

22. Server nach Anspruch 21, **dadurch gekennzeichnet, dass** er Mitteilungen und/oder Empfangsbestätigungen empfängt und statistische Anwenderdaten der besagten Nachrichten berechnet.

## Claims

1. System for transmitting messages including a telecommunication network (2) comprising a communication server (4) and at least one radiotelephone (1), the server comprising means for the transmission of messages to one or more radiotelephones, the radiotelephone(s) (1) being equipped with message storage and processing means (Mess-Serv), **characterised in that** each message (Mess-Serv) comprises a first field (V-TYP) containing information concerning the standard profile of the message recipient and **in that** the processing means compare the profile stored in each radiotelephone concerning the subscriber using the radiotelephone with the profile contained in the message and authorise storage of the message in the storage means if the profile of the subscriber using the radiotelephone is compatible with the standard profile contained in the message field.

2. System for transmitting messages according to claim 1, **characterised in that** the message comprises a field containing a reference address to the server and **in that** the processing means store information on the use of the messages, said information being sent to said server.

3. System according to claim 1, **characterised in that** the processing means comprise a service module (111) which self-configures on starting up according to selection conditions contained in a second field (V-AFF).

4. System for transmitting messages according to claim 3, **characterised in that** the service module includes means of sending an acknowledgement of receipt of the message stored accompanied or not by the profile of the radiotelephone user depending on selection data (ACK, ACK-PRO) contained in the second message field (V-AFF).

5. System according to claim 3, **characterised in that** the service module includes means of triggering the display of each message depending on selection data (INDIC-AFF, CPT-AFF, INI-AFF) contained in the second message field (V-AFF).

6. System according to claim 5, **characterised in that** the selection data includes a counter of a number of displays (CPT-AFF) and possibly a second counter of a display initialisation number (INI-AFF).

7. System according to claim 5, **characterised in that** a display mode indicator (INDIC-AFF) chooses amongst several possible modes.

8. System according to claim 7, **characterised in that** there are several configurable display modes, corresponding to at least:
a) the message display mode every N times that the radiotelephone is switched on;
b) the message display mode every N calls made by the subscriber;
c) the message display mode every N calls to a particular number;
d) the message display mode every day from a given time;
e) the message display mode whenever a call ends;
f) the message display mode by the subscriber's choice going via the menu.

9. System according to claim 1, **characterised in that** the processing means comprise a service module comprising a message conversion algorithm (1110) with respect to a use profile stored in the SIM card (11).

10. System according to claim 1, **characterised in that** the processing means comprise a service module comprising an algorithm (1114) for the processing and replacement of constants by names and vice versa.

11. System according to claim 1, **characterised in that** the processing means comprise a service module comprising a search algorithm (1112) for display following an external event.

12. System according to claim 1, **characterised in that** the processing means comprise a service module comprising the means to search for available space to save new messages and to erase the messages which have been displayed the planned number of times (1113).

13. System according to claim 1, **characterised in that** the processing means comprise a service module comprising means to send notifications, the notifications containing the number of displays, the profile of each user and data identifying the advertising customer.

14. Method for transmitting messages in a telecommunication network comprising a communication server and at least one radiotelephone, said server comprising means to transmit messages to one or more radiotelephones, the radiotelephone(s) being equipped with message storage and processing means, **characterised in that** it comprises:
- a step to transmit a message (Mess-Serv) which comprises a field (V-TYP) containing information concerning the standard profile of the message recipient and
- a step to process the message received by the recipient and compare the profile contained in this message (Mess-Serv) with a user subscriber profile stored in the radiotelephone memory;
- a step to store the message in the radiotelephone storage means if the user subscriber profile is compatible with the standard profile contained in the message.

15. Method according to claim 14, **characterised in that** the radiotelephone(s) comprise display means, the method including a step to display messages when events specified in a message field occur.

16. Method according to claim 14, **characterised in that** it includes a step to transmit an acknowledgement of receipt of the message accompanied or not by the profile of the user who received the message.

17. Method according to claim 14, **characterised in that** it includes a step to transmit a notification from the radiotelephone to the server containing a number of displays made for a given message, the profile of the radiotelephone which made these displays and data identifying the number of the message displayed and transmitted by an advertising customer together with data identifying the advertising customer.

18. Use of the transmission system according to one of claims 1 to 13, for investigation of services provided, **characterised in that** the server comprises an algorithm to record and extract statistics from notifications or acknowledgements of receipt received from one or more radiotelephones of the transmission system.

19. Card designed to equip a radiotelephone including means to store and process messages received by said radiotelephone, **characterised in that** the processing means compare the profile stored in the storage means concerning the subscriber using the radiotelephone with the profile contained in the message and authorise the storage of the message in the storage means if the profile of the subscriber using the radiotelephone is compatible with the standard profile contained in the message.

20. Card according to claim 19, **characterised in that** it comprises means to send to the server which sent the message a notification and/or an acknowledgement of receipt of the message stored accompanied or not by the profile of the user subscriber depending on selection data contained in a field.

21. Customer station or server comprising means to transmit messages to one or more radiotelephones, the radiotelephone(s) being equipped with message storage and processing means, **characterised in that** it transmits messages containing information concerning the standard profile of the message recipient so that the processing means compare the profile stored in each radiotelephone concerning the subscriber using the radiotelephone with the profile contained in the message and authorise storage of the message in the storage means if the profile of the subscriber using the radiotelephone is compatible with the standard profile contained in the message field.

22. Server according to claim 21, **characterised in that** it receives notifications and/or acknowledgements of receipt and calculates statistical data on the use of said messages.
